# EUROPEAN PATENT APPLICATION

(11) **EP 4 525 118 A1**
(43) Date of publication of application: **19.03.2025**
(21) Application number: 24807364.5
(22) Date of filing: 12.04.2024
(51) Int. Cl.: H01M 10/0562, H01M 10/052

(54) **SOLID ELECTROLYTE MEMBRANE AND ALL-SOLID-STATE BATTERY COMPRISING SAME**

(30) Priority: 16.05.2023 KR 20230063088
(71) Applicant: LG Energy Solution, Ltd., Seoul 07335 (KR)
(72) Inventor: LEE, Jieun, Daejeon 34122 (KR); KIM, Donghyeon, Daejeon 34122 (KR); KIM, Yun Kyoung, Daejeon 34122 (KR); KIM, Youngbok, Daejeon 34122 (KR)
(74) Representative: Goddar, Heinz J.
(86) International application number: PCT/KR2024/004927
(87) International publication number: WO 2024/237484

(57) **Abstract**

The present invention relates to a solid electrolyte membrane for an all-solid-state battery, comprising a first solid electrolyte particle and a second solid electrolyte particle,
wherein the Young's modulus of the first solid electrolyte particle is higher than the Young's modulus of the second solid electrolyte particle,
wherein the first solid electrolyte particle and the second solid electrolyte particle have an average particle size (D50) of 1 µm to 5 µm,
wherein the first solid electrolyte particles and the second solid electrolyte particles are mixed in a weight ratio of less than 7:3 to 2:8, and an all-solid-state battery comprising the same.

## Description

### [Technical Field]

The present application claims the benefit and priority to Korean Patent Application No. 10-2023-0063088, filed May 16, 2023, the disclosures of which are incorporated herein by reference in their entirety.

The present invention relates to a solid electrolyte membrane and an all-solid-state battery comprising same.

### [Related Art]

A variety of batteries are being researched to overcome the limitations of current lithium secondary batteries in terms of capacity, safety, power output, enlargement, and microminiaturization.

For example, metal-air batteries, which have a very large theoretical capacity compared to lithium secondary batteries, all-solid-state batteries, which do not have the risk of explosion in terms of safety, supercapacitors in terms of power output, NaS batteries or redox flow batteries (RFBs) in terms of enlargement, and thin film batteries in terms of microminiaturization are being continuously researched in academia and industry.

All-solid-state batteries are batteries in which the liquid electrolyte used in conventional lithium secondary batteries is replaced with a solid electrolyte, and they do not use flammable solvents, so that ignition or explosion caused by decomposition reactions of conventional electrolytes does not occur at all, and therefore, safety can be greatly improved. In addition, since lithium (Li) metal or lithium alloys can be used as the negative electrode material, it has the advantage of dramatically improving the energy density per mass and volume of the battery.

All-solid-state batteries are manufactured by interposing a solid electrolyte membrane between the positive electrode and negative electrode and then subjecting it to high-pressure pressing. The smoother the movement of lithium ions (Li⁺) at the interface of the positive electrode and the solid electrolyte membrane and the interface of the negative electrode and the solid electrolyte membrane, the better the performance of the all-solid-state battery. However, if the hardness of the solid electrolyte membrane is high, the resistance to the migration of lithium ions at the interface of the positive electrode and the solid electrolyte membrane and the interface of the negative electrode and the solid electrolyte membrane can significantly occurs, which can reduce the performance of the all-solid-state battery.

Therefore, it is necessary to improve the performance of all-solid-state batteries by minimizing the resistance at the interface of the positive electrode and the solid electrolyte membrane and the interface of the negative electrode and the solid electrolyte membrane.

### [Prior Art Reference]

### [Patent Reference]

Korean Laid-open Patent Publication No. 10-2021-0087919

### [Detailed Description of the Invention]

### [Technical Problem]

The present inventors have completed the present invention by confirming that the solid electrolyte membrane includes a first solid electrolyte particle and a second solid electrolyte particle, and that adjusting the Young's modulus, average particle size, and weight ratio of the first solid electrolyte particle and the second solid electrolyte particle can improve the interfacial bonding force between the positive electrode and the solid electrolyte membrane and the interfacial bonding force between the negative electrode and the solid electrolyte membrane, thereby minimizing the resistance generated at the interfaces.

Accordingly, it is an object of the present invention to provide a solid electrolyte membrane for an all-solid-state battery that can reduce a resistance that occurs at an interface of a positive electrode and a solid electrolyte membrane, and at an interface of a negative electrode and a solid electrolyte membrane, in an all-solid-state battery.

Further, the present invention aims to provide an all-solid-state battery having excellent lifetime characteristics and rate characteristics by including the solid electrolyte membrane.

### [Technical solution]

To accomplish the above objectives, the present invention provides to a solid electrolyte membrane for an all-solid-state battery comprising: a first solid electrolyte particle and a second solid electrolyte particle,
wherein the Young's modulus of the first solid electrolyte particle is higher than the Young's modulus of the second solid electrolyte particle,
wherein the first solid electrolyte particle and the second solid electrolyte particle have an average particle size (D50) of 1 µm to 5 µm,
wherein the first solid electrolyte particle and the second solid electrolyte particle are mixed in a weight ratio of less than 7:3 to 2:8.

The present invention also provides an all-solid-state battery comprising: a positive electrode, a negative electrode, and a solid electrolyte membrane interposed therebetween,
wherein the solid electrolyte membrane is the solid electrolyte membrane of the present invention.

### [Advantageous Effects]

The solid electrolyte membrane for an all-solid-state battery of the present invention includes a first solid electrolyte particle and a second solid electrolyte particle, and adjusting the Young's modulus, average particle size, and weight ratio of the first solid electrolyte particle and the second solid electrolyte particle can improve the interface bonding force of the positive electrode and the solid electrolyte membrane and the interface bonding force of the negative electrode and the solid electrolyte membrane, thereby minimizing the resistance generated at the interface.

Therefore, the all-solid-state battery comprising the solid electrolyte membrane of the present invention can have excellent lifetime characteristics and rate characteristics.

### [Brief Description of Drawing]

FIG. 1 is a graph of the lifetime characteristic measurements for Example 1, Comparative Example 1, and Comparative Example 2.
FIG. 2 is a graph of the lifetime characteristic measurements for Comparative Example 4.
FIG. 3 is a graph of rate characterization measurements for Example 1, Comparative Example 2, and Comparative Example 3.

### [Best Mode for Practicing the Invention]

Hereinafter, the present invention will be described in more detail.

The terms and words used in this specification and claims are not to be construed in their ordinary or dictionary sense, but rather in a sense and concept consistent with the technical idea of the invention, based on the principle that the inventor(s) may define the concept of a term as he/she sees fit to best describe his/her invention.

The terminology used in the present invention is used to describe particular examples only and is not intended to limit the present invention. Singular expressions include the plural meanings unless the context clearly indicates otherwise. In the present invention, the terms "comprising" or "having" and the like are intended to designate the presence of the features, numbers, steps, actions, components, parts, or combinations thereof described, and are not intended to preclude the presence or addition of one or more other features, numbers, steps, actions, components, parts, or combinations thereof.

### Solid electrolyte membrane for an all-solid-state battery

The present invention relates to a solid electrolyte membrane for an all-solid-state battery, comprising: a first solid electrolyte particle and a second solid electrolyte particle,
wherein the Young's modulus of the first solid electrolyte particle is higher than the Young's modulus of the second solid electrolyte particle,
wherein the first solid electrolyte particle and the second solid electrolyte particle have an average particle size (D50) of 1 µm to 5 µm,
wherein the first solid electrolyte particle and the second solid electrolyte particle may be mixed in a weight ratio of less than 7:3 to 2:8.

A solid electrolyte membrane for an all-solid-state battery of the present invention comprises a first solid electrolyte particle and a second solid electrolyte particle. The first solid electrolyte particle and the second solid electrolyte particle have different Young's modulus, and the Young's modulus of the first solid electrolyte particle may be higher than the Young's modulus of the second solid electrolyte particle. By including heterogeneous solid electrolyte particles with different Young's modulus, the Young's modulus of the solid electrolyte membrane can be adjusted. Thus, the resistance generated at the interface of the positive electrode and the solid electrolyte membrane of the all-solid-state battery and the interface of the negative electrode and the solid electrolyte membrane of the all-solid-state battery can be reduced, and an all-solid-state battery with improved lifetime characteristics and rate characteristics can be provided accordingly.

The Young's modulus of the first solid electrolyte particles may be 40 GPa to 80 GPa, preferably 40 GPa to 60 GPa, most preferably 40 GPa to 50 GPa. In general, the larger the Young's modulus of the particles, the harder the particles are and the less brittle they are. Since the first solid electrolyte particles have a Young's modulus in the above range, the solid electrolyte membrane can maintain its shape even when volume changes occur during charging and discharging of the all-solid-state battery.

Further, the second solid electrolyte particle may have a Young's modulus of 5 GPa to 30 GPa, preferably 10 GPa to 25 GPa, most preferably 15 GPa to 20 GPa. As the second solid electrolyte particle has a Young's modulus in the above range, it can be easily deformed at high pressure, resulting in an excellent bonding of the solid electrolyte membrane and the electrode. Further, the second solid electrolyte particle may be located between the first solid electrolyte particlesto minimize pores, which may facilitate lithium ion migration and play a role in improving the interfacial bonding of the solid electrolyte membrane and the electrode.

The difference in Young's modulus between the first solid electrolyte particle and the second solid electrolyte particle may be 15 GPa to 50 GPa, preferably 20 GPa to 40 GPa. When the difference in Young's modulus is less than 15 GPa, the first solid electrolyte particle may have a low Young's modulus, or the second solid electrolyte particle may have a high Young's modulus. If the difference in Young's modulus is less than 15 GPa due to the low Young's modulus of the first solid electrolyte particle, the physical stiffness of the solid electrolyte membrane may be reduced, and if the second solid electrolyte particle has a high Young's modulus, the effect of improving the interfacial bonding of the solid electrolyte membrane and the electrode cannot be expected. Furthermore, if the difference in Young's modulus is higher than 40 GPa, the Young's modulus of the first solid electrolyte particle increases, and thus the interfacial bonding force between the solid electrolyte membrane and the electrode may decrease, resulting in an increase in the interfacial resistance.

Further, the average particle sizes (D50) of the first solid electrolyte particle and the second solid electrolyte particle are the same as each other, and may be 1 µm to 5 µm, preferably 2 µm to 3 µm. If the average particle size (D50) of the first solid electrolyte particles and the second solid electrolyte particles is less than 1 µm, it is not easy to disperse the first solid electrolyte particles and the second solid electrolyte particles in the manufacture of the solid electrolyte membrane, and a solid electrolyte membrane with an uneven surface may be manufactured. As a result, the performance of an all-solid-state battery comprising the same may be reduced. Furthermore, as the first solid electrolyte particles and the second solid electrolyte particles have an average particle size in the above range, it is easy to disperse the first solid electrolyte particles and the second solid electrolyte particles in a slurrying process during the solid electrolyte membrane manufacturing process, so that a soild electrolyte membrane with a uniform surface can be manufactured.

The first solid electrolyte particles and the second solid electrolyte particles may be mixed in a weight ratio of less than 7:3 to 2:8, preferably in a weight ratio of 6:4 to 4:6, most preferably in a weight ratio of 5:5. If the content of the first solid electrolyte particles exceeds the above range, the Young's modulus of the solid electrolyte membrane may be excessively high, resulting in a low interfacial bonding force between the solid electrolyte membrane and the electrode, thereby reducing the lifetime characteristics of the all-solid-state battery comprising same. On the other hand, if the content of the first solid electrolyte particles is below the above range, the ionic conductivity of the solid electrolyte membrane may decrease, resulting in an increase in resistance, and the lifetime characteristics and rate characteristics of the all-solid-state battery comprising the solid electrolyte membrane may be degraded.

In the present invention, the Young's modulus of the solid electrolyte membrane may be 20 GPa to 40 GPa, preferably 25 GPa to 35 GPa. The solid electrolyte membrane of the present invention comprises a first solid electrolyte particle and a second solid electrolyte particle, wherein the Young's modulus of the first solid electrolyte particle is higher than the Young's modulus of the second solid electrolyte particle, the average particle size (D50) of the first solid electrolyte particle and the second solid electrolyte particle is 1 µm to 5 µm, and the first solid electrolyte particles and the second solid electrolyte particles are mixed in a weight ratio of 7:3 to 2:8. The second solid electrolyte particle has a low Young's modulus and has a smooth property, and the second solid electrolyte particle is located between the first solid electrolyte particles so that the space formed between the first solid electrolyte particles, i.e., the pores, can be minimized, and the interfacial bonding force between the solid electrolyte membrane and the electrode can be improved accordingly, thereby reducing the resistance to lithium ion migration, i.e., reducing the interfacial resistance occurring at the interface of the solid electrolyte membrane and the electrode. Accordingly, the lifetime characteristics and rate characteristics of an all-solid-state battery comprising the same can be improved.

Even if a solid electrolyte membrane containing one type of solid electrolyte has the same Young's modulus as the present invention, the space formed between the solid electrolyte particles cannot be minimized to achieve the effect of reducing the interfacial resistance.

The first solid electrolyte particle and the second solid electrolyte particle may be at least one selected from the group consisting of a sulfide-based solid electrolyte, a polymer-based solid electrolyte, and an oxide-based solid electrolyte, and preferably a sulfide-based solid electrolyte.

Further, the first solid electrolyte particle and the second solid electrolyte particle may be the same to each other, differing only in Young's modulus.

The sulfide-based solid electrolyte may contain sulfur (S) and have an ionic conductivity of a metal belonging to Group 1 or 2 of the periodic table, and may include a Li-P-S-based glass or a Li-P-S-based glass-ceramic.

Specifically, the sulfide-based solid electrolyte may include at least one selected from the group consisting of Li₆PS₅Cl, Li₆PS₅Br, Li₆PSₛI, Li₂S-P₂S₅, Li₂S-Lil-P₂S₅, Li₂S-Lil-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, preferably at least one selected from the group consisting of Li₆PS₅Cl, Li₆PS₅Br and Li₆PS₅I. The Li₆PS₅Cl, Li₆PS₅Br and Li₆PS₅I may be an argyrodite type solid electrolyte. Furthermore, the sulfide-based solid electrolyte may be doped with trace elements, for example, Li₆PS₅Cl may be additionally doped with bromine (Br).

The polymer-based solid electrolyte is a composite of a lithium salt and a polymeric resin, that is, a polymer electrolyte material formed by the addition of a polymeric resin to a solvated lithium salt, and may exhibit an ionic conductivity of about 1×10⁻⁷ S/cm or more, preferably about 1×10⁻⁵ S/cm or more.

Non-limiting examples of the polymer resins may include at least one of polyether-based polymers, polycarbonate-based polymers, acrylate-based polymers, polysiloxane-based polymers, phosphazene-based polymers, polyethylene derivatives, and alkylene oxide derivatives such as polyethylene oxide, phosphate ester polymers, poly agitation lysines, polyester sulfides, polyvinyl alcohols, polyvinylidene fluorides, polymers comprising ionic dissociating groups, and the like. Further, the polymer-based solid electrolyte may include at least one of a polymeric resin, such as a branched copolymer, a comb-like polymer, and a cross-linked polymer resin in which a poly ethylene oxide (PEO) main chain is copolymerized with an amorphous polymer such as PMMA, polycarbonate, polysiloxane (PDMS), and/or phosphazene as a comonomer.

In the polymer-based solid electrolyte, the lithium salts are ionizable lithium salts, which can be represented by Li⁺X⁻. The anions of such lithium salts are not particularly limited, but may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, or (CF₃CF₂SO₂)₂N⁻.

The oxide-based solid electrolyte may contain oxygen (O) and have the ionic conductivity of a metal belonging to Group 1 or 2 of the periodic table. For example, it may include at least one selected from the group consisting of LLTO-based compounds Li₆La₂CaTa₂O₁₂, Li₆La₂ANb₂O₁₂ (wherein A is Ca or Sr), Li₂Nd₃TeSbO₁₂, Li₃BO_{2.5}N_{0.5}, Li₉SiAlO₈, LAGP-based compounds, LATP-based compounds, Li₁₊ₓTi₂₋ₓAlₓSi_{y}(PO₄)_{3-y} (wherein 0≤x≤1, and 0≤y≤1), LiAlₓZr₂₋ₓ(PO₄)₃ (wherein 0≤x≤1), LiTiₓZr₂₋ₓ(PO₄)₃ (wherein 0≤x≤1), LISICON-based compounds, LIPON-based compounds, perovskite-based compounds, nasicon-based compounds, and LLZO-based compounds.

The solid electrolyte membrane may further comprise a binder. The binder is not particularly limited as long as it is commonly used in the art.

For example, it may include, but is not limited to, acrylonitrile butadiene rubber (NBR), styrene butadiene rubber (SBR), butadiene rubber (BR), styrene-butadiene-styrene copolymer (SBS), polybutadiene (PAN), styrene-ethylene/butylene-styrene block copolymer (SEBS), silicone rubber (SR), hydrogenated nitrile butadiene rubber (HNBR), poly(ethylene vinyl acetate) (PEVA), poly(methyl methacrylate) (PMMA), polyisobutene (PIB), polyacrylate, and the like.

The binder may be comprised in an amount of 0.5% to 5% by weight based on the total weight of the solid electrolyte membrane. Further, the combined weight of the first solid electrolyte and the second solid electrolyte may be comprised in an amount of 95% to 99.5% by weight based on the total weight of the solid electrolyte membrane. By including the solid electrolyte and the binder as described above, a solid electrolyte membrane for an all-solid-state battery can be prepared that can be maintained in film form while minimizing the content of the binder that acts as a resistance to ionic conductivity.

The solid electrolyte membrane for an all-solid-state battery of the present invention may be prepared by dispersing the first solid electrolyte particles and the second solid electrolyte particles in a solvent to prepare a slurry, then applying the slurry to one side of a release film, drying it, and removing the release film. The slurry may further comprise a binder.

The first solid electrolyte particle, the second solid electrolyte particle, and the binder are as described above.

The solvent may be any solvent capable of dispersing the first solid electrolyte particles, the second solid electrolyte particles, and the binder, but is not particularly limited, for example, xylene, hexane, benzene, anisole, isobutyl isobutyrate, toluene, and butyl butyrate.

The ionic conductivity of the solid electrolyte membrane for the all-solid-state battery may be 1 mS/cm to 1.6 mS/cm. The ionic conductivity may be measured at room temperature (25°C).

### All-solid-state battery

The present invention relates to an all-solid-state battery comprising a positive electrode, a negative electrode and a solid electrolyte membrane interposed therebetween, wherein the solid electrolyte membrane may be the solid electrolyte membrane of the present invention described above.

The all-solid-state battery is a lithium secondary battery, wherein there is no limitation for positive electrode or negative electrode, and may be a lithium-air battery, a lithium-oxide battery, a lithium-sulfur battery, or a lithium metal battery.

The positive electrode may comprise a positive electrode current collector and a positive electrode active material layer applied to one or both sides of the positive electrode current collector.

The positive electrode current collector is intended to support the positive electrode active material, and is not particularly limited, as long as it has good conductivity and is electrochemically stable in the voltage range of the lithium secondary battery. For example, the positive electrode current collector may be any metal selected from the group consisting of copper, aluminum, stainless steel, titanium, silver, palladium, nickel, alloys thereof, and combinations thereof, wherein the stainless steel may be surface treated with carbon, nickel, titanium, or silver, wherein an aluminum-cadmium alloy is preferably used as the alloy, and wherein a calcined carbon, a non-conductive polymer whose surface is treated with a conductive material, or a conductive polymer may also be used.

The positive electrode current collector can form microscopic irregularities on its surface to strengthen the binding force with the positive electrode active material, and various forms can be used, such as films, sheets, foils, meshes, nets, porous bodies, foams, non-woven bodies, etc.

The positive electrode active material layer may comprise a positive electrode active material and optionally a conductive material and a binder.

The positive electrode active material may vary depending on the type of all-solid-state battery. For example, the positive electrode active material may include, but is not limited to, a layered compound, such as lithium cobalt oxide (LiCoO₂), or lithium nickel oxide (LiNiO₂), or a compound substituted with one or more transition metals; a lithium manganese oxide such as Li₁₊ₓMn₂₋ₓO₄ (wherein 0≤x≤0.33), LiMnO₃, LiMn₂O₃, or LiMnO₂; a lithium copper oxide (Li₂CuO₂); a vanadium oxide, such as LiV₃O₃, V₂O₅, or Cu₂V₂O₇; a lithium nickel oxide of the Ni site type, represented by formula LiNi₁₋ₓMₓO₂ (wherein M is Co, Mn, Al, Cu, Fe, Mg, B, or Ga; and 0.01≤x≤0.3); a lithium manganese complex oxide represented by formula LiMn₂₋ₓMₓO₂ (wherein M is Co, Ni, Fe, Cr, Zn or Ta; and 0.01≤x≤0.1) or Li₂Mn₃MO₈ (wherein M is Fe, Co, Ni, Cu or Zn); a lithium manganese complex oxide with spinel structure represented by LiNiₓMn₂₋ₓO₄; LiCoPO₄; LiFePO₄; elemental sulfur (S₈); or a sulfur-based compound such as Li₂Sₙ (wherein n is 1), organosulfur compounds or carbon-sulfur polymers ((C₂Sₓ)ₙ, wherein x is 2.5 to 50, and n is 2).

The conductive material is a material that electrically connects the electrolyte and the positive electrode active material and serves as a pathway for electrons to move from the current collector to the positive electrode active material, and can be used without restriction as long as it does not cause any chemical changes in the lithium secondary battery and has porosity and conductivity.

For example, the conductive material can be a porous carbon-based material, such as carbon black, graphite, graphene, activated carbon, or carbon fiber; metallic fibers, such as metal mesh; metallic powders, such as copper, silver, nickel, or aluminum; or organic conductive materials, such as polyphenylene derivatives. These conductive materials may be used singly or in combination.

The products currently commercially available as a conductive material include the Acetylene Black series (such as Chevron Chemical Company or Gulf Oil Company), Ketjen Black EC series (Armak Company), Vulcan XC-72 (Cabot Company), and Super P (MMM). Examples include acetylene black, carbon black, and graphite.

Further, the positive electrode may further comprise a binder, wherein the binder more increases the cohesion between the components comprising the positive electrode and between them and the current collector, and any binder known in the art may be used.

For example, the binder may be one, or a mixture or copolymer of two or more selected from the group consisting of a fluoroplastic binder comprising polyvinylidenefluoride (PVdF) and polytetrafluoroethylene (PTFE); a rubber-based binder comprising styrene butadiene rubber (SBR), acrylonitrile-butadiene rubber, and styrene-isoprene rubber; a cellulosic binder, including carboxyl methyl cellulose (CMC), starch, hydroxypropyl cellulose, and regenerated cellulose; a polyalcoholic binder; a polyolefin binder, including polyethylene, and polypropylene; a polyimide binder; a polyester binder; and a silane-based binder.

The negative electrode may comprise a negative electrode current collector and a negative electrode active material located on the negative electrode current collector. Furthermore, the negative electrode, like the positive electrode, may comprise a conductive material and a binder as required. In this case, the negative electrode current collector, the conductive material, and the binder are as described above.

The negative electrode active material can be any material that can reversibly intercalate or deintercalate lithium ions (Li⁺), and any material that can react with lithium ions to reversibly form lithium-containing compounds.

For example, the negative electrode active material may include, but is not limited to, , one or more carbonaceous materials selected from the group consisting of crystalline artificial graphite, crystalline natural graphite, amorphous hard carbon, low crystalline soft carbon, carbon black, acetylene black, Ketjen black, super-P, graphene, and fibrous carbon, Si-based materials, LiₓFe₂O₃ (wherein 0≤x≤1), LiₓWO₂ (wherein 0≤x≤1), and SnₓMe₁₋ₓMe'_{y}O_{z} (wherein Me is Mn, Fe, Pb or Ge; Me' is Al, B, P, Si, Group 1, 2 or 3 elements of the periodic table, or halogen; 0<x≤1; 1≤y≤3; 1≤z≤8); lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅; conductive polymers such as polyacetylene; Li-Co-Ni based materials; titanium oxides; or lithium titanium oxides.

Further, the negative electrode may comprise a negative electrode current collector and a coating layer comprising metal-carbon composite particles located on the negative electrode current collector. This may indicate an anodeless, meaning that it does not contain any negative electrode active material.

The negative electrode may be such that when the all-solid-state battery is charged, lithium ions pass through the coating layer to reach the surface of the negative electrode current collector, and are electrodeposited to form a lithium metal layer.

The metal-carbon composite particles may have carbon particles and metal particles attached to each other or coated on the surface with the other, and may be physically or chemically bonded.

The carbon particles may include natural graphite, artificial graphite, hard carbon, soft carbon, carbon black, acetylene black, Ketjen black, channel black, furnace black, lamp black, thermal black, carbon nanotubes, fullerene, carbon fiber, and carbon fluoride.

The metal particles are lithiophilic metals, for example, Ni, Cu, Ag, Au, Pt, Al, Zn, or Bi, and may be one or a combination of two or more thereof. By introducing a metal having the above lithiophilic properties, it is advantageous to form a stable and uniform lithium layer on the surface of the current collector.

The negative electrode may be prepared by mixing a binder solution and the composite particles to prepare a slurry for forming a coating layer, and then applying and drying the slurry onto a negative electrode current collector. In this case, the binder may be a conventional binder used in the art.

The preparation of the all-solid-state battery is not particularly limited by the present invention, and the known methods may be used.

For example, a solid electrolyte membrane is disposed between the positive electrode and negative electrode, and the cell is assembled by compression molding. The assembled cell is then installed in an outer material and sealed by heating compression. Laminated packs of aluminum or stainless steel, and metallic containers, such as cylindrical or prismatic containers, can be used as the outer material.

In one example, the electrodes of the positive electrode and negative electrode are prepared via a slurry coating process in which the electrodes are prepared in the form of a slurry composition comprising a respective electrode active material, a solvent, and a binder, coated, and then dried.

The method of coating the electrode slurry onto the current collector may include dispensing the electrode slurry onto the collector and uniformly dispersing it using a doctor blade, die casting, comma coating, or screen printing. In addition, the electrode slurry can be molded on a separate substrate and then bonded to the current collector by pressing or lamination. In this case, the final coating thickness can be controlled by adjusting the concentration of the slurry solution or the number of coatings.

The drying process is a process of removing solvent and moisture from the slurry in order to dry the slurry coated on the metal current collector, which may vary depending on the solvent used. For example, it is performed in a vacuum oven at 50 °C to 200°C. Drying methods include, for example, drying by warm air, hot air, or low humidity air, vacuum drying, or irradiation with (far) infrared or electromagnetic radiation. The drying time is not particularly limited, but is typically in the range of 30 seconds to 24 hours.

After the drying process, the process may further comprise a cooling process, wherein the cooling process may be slow cooling to room temperature to ensure that the recrystallized organization of the binder is well formed.

Furthermore, if necessary, in order to increase the capacity density of the electrode after the drying process and to increase the adhesion between the current collector and the active material, a rolling process can be carried out in which the electrode is passed between two rolls heated to a high temperature and compressed to a desired thickness. The rolling process is not particularly limited in the present invention, and any known rolling process is possible. For example, it can be performed by passing it between rotating rolls or by utilizing a flatbed press machine.

The shape of the all-solid-state battery is not particularly limited and can be cylindrical, stacked, coin-shaped, or otherwise.

### [Mode for Practicing the Invention]

Hereinafter, preferred examples of the present invention are described for the purpose of illustrating the present invention, but it is apparent to those skilled in the art that various changes and modifications are possible within the scope of the present invention and the technical idea, and that such changes and modifications fall within the scope of the appended patent claims.

### <Preparation of an all-solid-state battery>

### Example 1

Argyrodite-type (Li₆PS₅Cl) with a Young's modulus of 42 GPa and an average particle size (D50) of 2.5 µm was used as the first solid electrolyte particle. Argyrodite (Li₆PS₅Cl) with a Young's modulus of 18 GPa and an average particle size (D50) of 2.5 µm was used as the second solid electrolyte particle. Butadiene rubber was used as a binder.

A slurry was prepared by adding the first solid electrolyte particle, the second solid electrolyte particle, and the binder to a butyl butyrate solvent, wherein the weight ratio of the first solid electrolyte particle and the second solid electrolyte particle was 5:5. Also, the weight ratio of the first solid electrolyte particle, the second solid electrolyte particle, and the binder was 49:49:2.

Polyethylene terephthalate was used as a release film, and a slurry was coated on the release film using a bar coater. The release film was then dried at room temperature for 5 hours, and the release film was removed to prepare a solid electrolyte membrane for an all-solid-state battery. The solid electrolyte membrane for the all-solid-state battery had a Young's modulus of 30 GPa.

The positive electrode active material (NCM 811), conductive material (carbon fiber), solid electrolyte (Li₆PS₅Cl), and binder (polytetrafluoroethylene) were mixed in a weight ratio of 84:0.2:14.8:1, and the mixture was applied to the positive electrode current collector and rolled, to prepare a positive electrode.

The negative electrode was fabricated by applying a mixture of negative electrode active material (carbon black) and binder (polyvinylidene fluoride) on a 10 µm thickness SUS, which is the negative electrode current collector, with a thickness of 150 µm.

An all-solid-state battery was prepared by interposing the solid electrolyte membrane between the positive electrode and negative electrode, and a driving pressure of 10 Mpa was applied using a jig.

### Comparative Example 1

An all-solid-state battery was prepared by performing the same procedure as in Example 1 above, except that Argyrodite-type (Li₆PS₅Cl) having a Young's modulus of 42 GPa and an average particle size (D50) of 2.5 µm was used as the first solid electrolyte particle, no second solid electrolyte was used, and the first solid electrolyte particle was used at twice the content of Example 1. The Young's modulus of the solid electrolyte membrane for the all-solid-state battery was 42 GPa.

### Comparative Example 2

An all-solid-state battery was prepared by performing the same procedure as Example 1 above, except that Argyrodite-type (Li₆PS₅Cl) having a Young's modulus of 18 GPa and an average particle size (D50) of 2.5 µm was used as the second solid electrolyte particle, the first solid electrolyte particle was not used, and the second solid electrolyte particle was used at twice the content of Example 1. The Young's modulus of the solid electrolyte membrane for the all-solid-state battery was 18 GPa.

### Comparative Example 3

An all-solid-state battery was prepared by performing the same procedure as Example 1 above, except that the first solid electrolyte particles and the second solid electrolyte particles were mixed in a weight ratio of 2:8.

### Comparative Example 4

An all-solid-state battery was prepared by performing the same procedure as Example 1 above, except that Argyrodite-type (Li₆PS₅Cl) with an average particle size (D50) of 0.6 µm was used as the second solid electrolyte particle.

### Experimental Example 1. Measurement of the lifetime characteristics of an all-solid-state battery

The lifetime characteristics of the all-solid-state batteries of Example 1, Comparative Example 1, Comparative Example 2, and Comparative Example 4 were measured.

The lifetime characterization was measured as the capacity retention of the all-solid-state batteries of Example 1, Comparative Example 1, Comparative Example 2, and Comparative Example 4 for 100 charge and discharge cycles in which charging was performed to 4.25 V at 0.33 C in CCCV mode at a temperature of 60°C and discharging was performed to 3.0 V at a constant current.

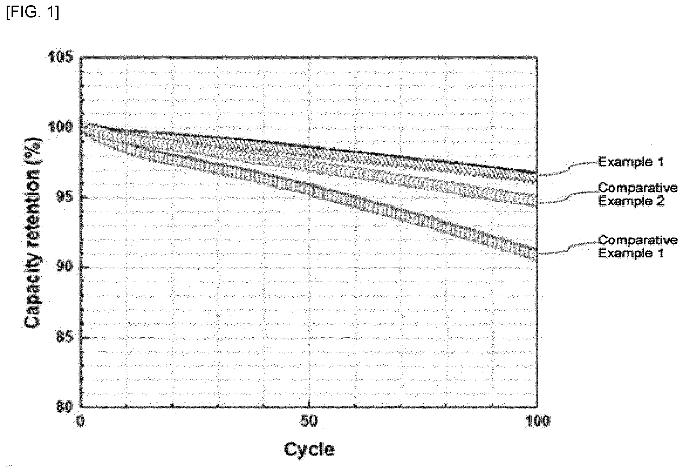

The results of Example 1, Comparative Example 1, and Comparative Example 2 are shown in FIG. 1.

From the results in FIG. 1, the all-solid-state battery comprising the solid electrolyte membrane of the present invention of Example 1 has the best measured lifetime characteristic results.

Comparative Example 1 includes only Argyrodite-type (Li₆PS₅Cl) with a Young's modulus of 42 GPa and an average particle size (D50) of 2.5 µm as solid electrolyte particles, and does not include a second solid electrolyte particle. In Comparative Example 1, the interface bonding force between the solid electrolyte membrane and the positive electrode and the interface bonding force between the solid electrolyte membrane and the negative electrode were very low, resulting in a deterioration of the lifetime characteristics of the all-solid-state battery.

Comparative Example 2 includes only argyrodite (Li₆PS₅Cl) with a Young's modulus of 18 GPa and an average particle size (D50) of 2.5 µm as solid electrolyte particles, and does not include a first solid electrolyte particle. Comparative Example 2 shows that the ionic conductivity of the solid electrolyte membrane is low, resulting in an increase in the resistance of the all-solid-state battery and a deterioration in the lifetime characteristics of the all-solid-state battery.

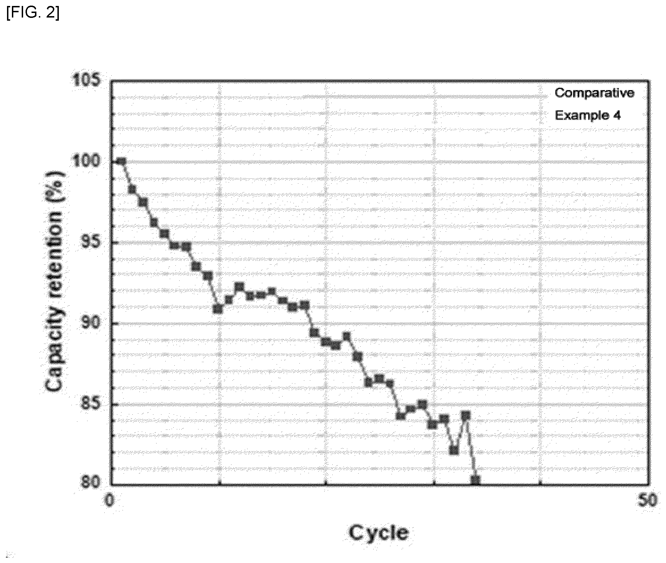

The results of Comparison Example 4 are shown in FIG. 2.

In Comparative Example 4, Argyrodite-type (Li₆PS₅Cl) with an average particle size (D50) of 0.6 µm was used as a second solid electrolyte particle, and an inhomogeneous solid electrolyte membrane was prepared due to the difficulty in dispersing the second solid electrolyte particle during the preparation of the solid electrolyte membrane. As a result, the lifetime characteristics of the all-solid-state battery were very poor.

### Experimental Example 2. Measurement of the rate characteristics of an all-solid-state battery

The rate characteristics of the all-solid-state batteries of Example 1, Comparative Example 2, and Comparative Example 3 were measured.

Rate characterization measurements were taken by charging to 3.0V to 4.25V, 0.1C, and discharging to 0.1, 0.33, 0.5, and 1C.

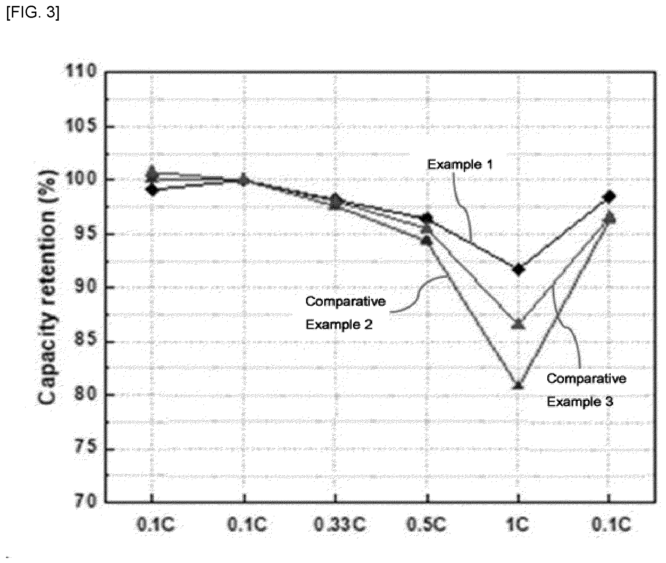

The results of Example 1, Comparative Example 2, and Comparative Example 3 are shown in FIG. 3.

In the results of FIG. 3, Example 1, an all-solid-state battery comprising a solid electrolyte membrane of the present invention, showed excellent rate characteristics.

Comparative Example 2 comprises only Argyrodite-type (Li₆PS₅Cl) with a Young's modulus of 18 GPa and an average particle size (D50) of 2.5 µm as a solid electrolyte, and does not include the first solid electrolyte particles. In Comparative Example 2, the resistance of the all-solid-state battery increased due to the low ionic conductivity of the solid electrolyte membrane, resulting in poor rate characteristics of the all-solid-state battery.

Comparative Example 3 provides a mixture of first solid electrolyte particles and second solid electrolyte particles in a weight ratio of 2:8, which showed improved rate characteristics compared to Comparative Example 2, but did not show rate characteristics results as good as those of Example 1.

From the comparisons, it was found that an all-solid-state battery comprising a solid electrolyte membrane for an all-solid-state battery has excellent lifetime characteristics and rate characteristics, wherein it includes a first solid electrolyte particle and a second solid electrolyte particle, wherein the Young's modulus of the first solid electrolyte particle is higher than the Young's modulus of the second solid electrolyte particle, wherein the first solid electrolyte particle and the second solid electrolyte particle have an average particle size (D50) of 1 to 5 µm, wherein the first solid electrolyte particles and the second solid electrolyte particles are mixed in a weight ratio of less than 7:3 to 2:8.

It is found that this is due to the effect that the solid electrolyte membrane minimizes the resistance at the interface of the positive electrode and the solid electrolyte membrane and the interface of the negative electrode and the solid electrolyte membrane.

## Claims

1. A solid electrolyte membrane for an all-solid-state battery, comprising:
a first solid electrolyte particle and a second solid electrolyte particle,
wherein the Young's modulus of the first solid electrolyte particle is higher than the Young's modulus of the second solid electrolyte particle,
wherein the first solid electrolyte particle and the second solid electrolyte particle have an average particle size (D50) of 1 µm to 5 µm,
wherein the first solid electrolyte particles and the second solid electrolyte particles are mixed in a weight ratio of less than 7:3 to 2:8.

2. The solid electrolyte membrane according to claim 1, wherein the first solid electrolyte particles have a Young's modulus of 40 GPa to 80 GPa.

3. The solid electrolyte membrane according to claim 1, wherein the second solid electrolyte particles have a Young's modulus of 5 GPa to 30 GPa.

4. The solid electrolyte membrane according to claim 1, wherein the difference in Young's modulus of the first solid electrolyte particles and the second solid electrolyte particles is 15 GPa to 50 GPa.

5. The solid electrolyte membrane according to claim 1, wherein the first solid electrolyte particles and the second solid electrolyte particles have a particle size (D50) of 2 to 3 µm.

6. The solid electrolyte membrane according to claim 1, wherein the first solid electrolyte particles and the second solid electrolyte particles are mixed in a weight ratio of 6:4 to 4:6.

7. The solid electrolyte membrane according to claim 1, wherein the first solid electrolyte particle and the second solid electrolyte particle comprise at least one selected from the group consisting of a sulfide-based solid electrolyte, a polymer-based solid electrolyte, and an oxide-based solid electrolyte.

8. The solid electrolyte membrane according to claim 7, wherein the first solid electrolyte particle and the second solid electrolyte particle are sulfide-based solid electrolytes.

9. The solid electrolyte membrane according to claim 1, wherein the solid electrolyte membrane further comprises a binder.

10. The solid electrolyte membrane according to claim 9, wherein the binder comprises 0.5% to 5% by weight based on the total weight of the solid electrolyte membrane.

11. An all-solid-state battery comprising: a positive electrode, a negative electrode, and a solid electrolyte membrane interposed therebetween,
wherein the solid electrolyte membrane is a solid electrolyte membrane according to claim 1.

12. The all-solid-state battery according to claim 11,
wherein the negative electrode comprises a negative electrode current collector and a negative electrode active material located on the negative electrode current collector; or
comprises a negative electrode current collector and a coating layer comprising metal-carbon composite particles located on the negative electrode current collector.
